# EUROPÄISCHE PATENTSCHRIFT

(11) **EP 2 629 269 B1**
(45) Veröffentlichungstag und Bekanntmachung des Hinweises auf die Patenterteilung: **12.04.2017**
(21) Anmeldenummer: 12001007.9
(22) Anmeldetag: 16.02.2012
(51) Int. Cl.: G07C 9/00, B60R 25/00

(54) **VERFAHREN ZUR KONTROLLE DES ZUGANGS ZU EINEM FAHRZEUG ODER DES STARTS EINES FAHRZEUGES**
METHOD FOR CONTROLLING ACCESS TO A VEHICLE OR STARTING A VEHICLE
PROCÉDÉ DE CONTRÔLE D'ACCÈS À UN VÉHICULE OU DU DÉMARRAGE D'UN VÉHICULE

(43) Veröffentlichungstag der Anmeldung: 21.08.2013
(73) Patentinhaber: Delphi Technologies, Inc., Troy MI 48007 (US)
(72) Erfinder: Theil, Andreas, 51491 Overath (DE); Stiewe, Thomas, 58540 Meinerzhagen (DE); Rehbach, Ralf, 51789 Lindlar (DE); Giesen, Marko, 51588 Nümbrecht (DE)
(74) Vertreter: Delphi France SAS

(56) Entgegenhaltungen:
- EP-A1- 1 733 937
- EP-A1- 1 972 511
- EP-A1- 1 988 513
- DE-A1- 10 105 060
- DE-A1- 19 927 253
- DE-A1-102006 037 237

## Beschreibung

Die Erfindung betrifft ein Verfahren zur Kontrolle des Zugangs zu einem Fahrzeug, insbesondere Kraftfahrzeug. Außerdem betrifft die Erfindung ein Verfahren zur Kontrolle des Starts eines Fahrzeugs.

Die Entriegelung moderner Kraftfahrzeuge erfolgt immer häufiger durch mobile Identifikationsgeber, beispielsweise Funkschlüssel oder Transponder, welche die Benutzer der Fahrzeuge zwar bei sich tragen, jedoch nicht aktiv betätigen müssen. Zur Erkennung des mobilen Identifikationsgebers sendet eine fahrzeugseitige Sende-/Empfangseinrichtung in gewissen zeitlichen Abständen oder permanent ein Signal mit einer bestimmten Feldstärke aus. Empfängt der mobile Identifikationsgeber das Signal der fahrzeugseitigen Sende-/Empfangseinrichtung, wird ein Authentifizierungsvorgang eingeleitet und ein vorbestimmter Authentifizierungscode vom mobilen Identifikationsgeber an die fahrzeugseitige Sende-/Empfangseinrichtung übertragen. Wird der mobile Identifikationsgeber fahrzeugseitig positiv authentifiziert, kann eine Tür des Fahrzeugs geöffnet werden. Systeme dieser Art werden auch als passive Zugangsberechtigungssysteme bezeichnet, da der Benutzer den mobilen Identifikationsgeber zu keinem Zeitpunkt aktiv betätigen muss.

Die DE 10 2006 037 237 A1 beschreibt ein Verfahren gemäß dem Oberbegriff des Anspruchs 1.

Ähnlich arbeitende Systeme sind auch für eine Kontrolle des Starts eines Fahrzeugs bekannt. Hierbei wird ebenfalls durch ein Signal einer fahrzeugseitigen Sende-/Empfangseinrichtung ein Authentifizierungsvorgang eingeleitet und bei positiver Authentifizierung eines mobilen Identifikationsgebers eine Freigabe zum Start eines Fahrzeugs erteilt, ohne dass der Benutzer des Fahrzeugs den mobilen Identifikationsgeber aktiv betätigen oder in ein Zündschloss stecken muss.

Das Signal der fahrzeugseitigen Sende-/Empfangseinrichtung besitzt meist eine begrenzte Reichweite, wodurch der mobile Identifikationsgeber nur in einem Nahbereich des Fahrzeugs authentifiziert werden kann. Dadurch ist sichergestellt, dass eine Tür des Fahrzeugs nur dann entriegelt werden kann, wenn sich der mobile Identifikationsgeber in dem Nahbereich des Fahrzeugs befindet.

Allerdings sind Methoden bekannt, um diese Reichenweitenbeschränkung unbefugt zu umgehen. So werden bei so genannten Voll-Duplex-Angriffen, die auch als Relay Attacks bezeichnet werden, von unbefugten Personen zwei tragbare Sende-/ Empfangseinrichtungen verwendet, von denen die eine im Nahbereich des Fahrzeugs platziert wird, während die andere in einem Nachbereich des mobilen Identifikationsgebers in Position gebracht wird. Die Kommunikation zwischen der fahrzeugseitigen Sende-/ Empfangseinrichtung und dem mobilen Identifikationsgeber erfolgt somit über die tragbaren Sende-/Empfangseinrichtungen, wodurch das Fahrzeug geöffnet werden kann, ohne dass sich der mobile Identifikationsgeber tatsächlich im Nahbereich des Fahrzeugs befindet.

Eine Möglichkeit, einen derartigen Voll-Duplex-Angriff abzuwehren oder zumindest zu erschweren, besteht beispielsweise darin, dass das Fahrzeug ein vorbestimmtes Bewegungsmuster des mobilen Identifikationsgebers erkennen muss, ehe eine Tür des Fahrzeugs entriegelt wird. Dabei wird dieses Bewegungsmuster entweder durch optische Sensoren oder durch die Intensitätswerte des Anfragesignals am Ort des mobilen Identifikationsgebers bestimmt, welche dann fahrzeugseitig ausgewertet werden.

Ferner ist es bekannt, den Transponder mit einem Bewegungssensor auszustatten. Eine Entriegelung einer Tür des Fahrzeugs erfolgt in diesem Fall nur dann, wenn innerhalb eines bestimmten Zeitintervalls vor der Authentifizierung eine Bewegung des Transponders stattgefunden hat.

Der Erfindung liegt die Aufgabe zugrunde, ein Kontrollverfahren zu schaffen, welches einen besseren Schutz gegen unbefugten Zugang zu einem Fahrzeug bzw. gegen unbefugten Start eines Fahrzeugs gewährleistet.

Die Aufgabe wird durch ein Verfahren mit den Merkmalen des Anspruchs 1 bzw. 2 gelöst.

Das erfindungsgemäße Verfahren zur Kontrolle des Zugangs zu einem Fahrzeug beruht auf einem mobilen Identifikationsgeber, welcher eine Logik enthält, um aus der absoluten Feldstärke des Signals der fahrzeugseitigen Sende-/ Empfangseinrichtung einen Abstand zwischen der fahrzeugseitigen Sende-/Empfangseinrichtung und dem mobilen Identifikationsgeber zu ermitteln. Sobald ein bestimmter Abstand zur fahrzeugseitigen Sende-/Empfangseinrichtung unterschritten wird, insbesondere sobald das Signal der fahrzeugseitigen Sende-/Empfangseinrichtung stark genug ist, um empfangen zu werden, beginnt der mobile Identifikationsgeber damit, das Signal der fahrzeugseitigen Sende-/Empfangseinrichtung, das beispielsweise in gewissen zeitlichen Abständen oder permanent gesendet wird, zu empfangen und auszuwerten. Durch die Logik im mobilen Identifikationsgeber wird aus der absoluten Feldstärke des Signals eine abstandsabhängige Beurteilungsgröße ermittelt. Der mobile Identifikationsgeber sendet die Beurteilungsgröße an das Fahrzeug. Die Überprüfung, ob die Beurteilungsgröße das vorbestimmte Kriterium erfüllt, erfolgt in diesem Fall also fahrzeugseitig. Dies hat den Vorteil, dass die Beurteilungsgröße an dem Ort ausgewertet wird, an welchem auch ein Authentifizierungscode des mobilen Identifikationsgebers überprüft wird. Eine separate Auswerteeinheit zur Überprüfung der Beurteilungsgröße im mobilen Identifikationsgeber ist somit nicht nötig. Nur wenn die Beurteilungsgröße ein vorbestimmtes Kriterium erfüllt und der mobile Identifikationsgeber fahrzeugseitig positiv authentifiziert wird, kann eine Tür des Fahrzeugs entriegelt und/oder geöffnet werden. Insbesondere kann die Entriegelung dabei unmittelbar erfolgen oder erst, wenn z.B. ein Türgriff betätigt wird. Es ist auch denkbar, dass sich eine Tür des Fahrzeugs bei Erfüllung des vorbestimmten Kriteriums unmittelbar öffnet. So könnte sich z.B. ein Kofferraumdeckel selbsttätig öffnen, wenn sich der mobile Identifikationsgeber auf den Kofferraum zubewegt.

Das erfindungsgemäße Verfahren zur Kontrolle des Starts eines Fahrzeugs basiert ebenfalls auf einem mobilen Identifikationsgeber, welcher eine Logik enthält, um aus der absoluten Feldstärke des Signals der fahrzeugseitigen Sende-/Empfangseinrichtung einen Abstand zwischen der fahrzeugseitigen Sende-/Empfangseinrichtung und dem mobilen Identifikationsgeber zu ermitteln. Der mobile Identifikationsgeber empfängt das Signal der fahrzeugseitigen Sende-/Empfangseinrichtung, das beispielsweise in gewissen zeitlichen Abständen oder permanent gesendet wird und wertet es aus. Durch die Logik im mobilen Identifikationsgeber wird aus der absoluten Feldstärke des Signals eine Beurteilungsgröße ermittelt. Der mobile Identifikationsgeber sendet die Beurteilungsgröße an das Fahrzeug. Die Überprüfung, ob die Beurteilungsgröße das vorbestimmte Kriterium erfüllt, erfolgt in diesem Fall also fahrzeugseitig. Dies hat den Vorteil, dass die Beurteilungsgröße an dem Ort ausgewertet wird, an welchem auch ein Authentifizierungscode des mobilen Identifikationsgebers überprüft wird. Eine separate Auswerteeinheit zur Überprüfung der Beurteilungsgröße im mobilen Identifikationsgeber ist somit nicht nötig. Nur wenn die Beurteilungsgröße ein vorbestimmtes Kriterium erfüllt und der mobile Identifikationsgeber fahrzeugseitig positiv authentifiziert wird, wird ein Motor des Fahrzeugs zum Start freigegeben.

Durch die Erfindung wird sowohl die Kontrolle des Zugangs zu einem Fahrzeug als auch die Kontrolle des Starts eines Fahrzeugs verbessert. Somit kann insgesamt ein verbesserter Diebstahlschutz erreicht werden. Außerdem kann ein Fahrzeug aufgrund der Tatsache, dass sich die Logik zur Bestimmung der Beurteilungsgröße im mobilen Identifikationsgeber befindet, auch nachträglich kostengünstig mit diesem verbesserten Diebstahlschutz ausgerüstet werden.

Vorteilhafte Ausbildungen der Erfindung sind den Unteransprüchen, der Beschreibung und der Zeichnung zu entnehmen.

Gemäß einer besonders einfachen Ausbildung des Verfahrens ist das vorbestimmte Kriterium erfüllt, wenn der ermittelte Abstand zwischen der fahrzeugseitigen Sende-/Empfangseinrichtung und dem mobilen Identifikationsgeber geringer als ein vordefinierter Abstand ist. So kann das vorbestimmte Kriterium bei der Zugangskontrolle beispielsweise erfüllt sein, wenn sich der mobile Identifikationsgeber in einem Abstand von weniger als fünf Metern vom Fahrzeug befindet. Um Voll-Duplex-Angriffe zu erschweren, ist es auch denkbar, dieses Kriterium von Zeit zu Zeit automatisch oder manuell zu ändern. So könnte es abhängig von z.B. bestimmten Wochentagen und/oder Uhrzeiten variiert werden. Bei der Startkontrolle kann das vorbestimmte Kriterium z.B. erfüllt sein, wenn sich der mobile Identifikationsgeber innerhalb des Fahrzeugs, also insbesondere in einem Bereich maximaler Feldstärke, befindet.

Gemäß einer alternativen Ausführungsform ist das vorbestimmte Kriterium erfüllt, wenn der mobile Identifikationsgeber innerhalb eines vorgegebenen Zeitraums ein vordefiniertes Bewegungsmuster vollführt. Insbesondere wird hierbei zu verschiedenen Zeitpunkten der Abstand zwischen dem mobilen Identifikationsgeber und der fahrzeugseitigen Sende-/ Empfangseinrichtung ermittelt und daraus ein Bewegungsmuster des mobilen Identifikationsgebers relativ zur fahrzeugseitigen Sende-/ Empfangseinrichtung bestimmt. Bei der Zugangskontrolle kann das vorbestimmte Kriterium beispielsweise erfüllt sein, wenn sich der mobile Identifikationsgeber auf das Fahrzeug zu bewegt, also aus einem Bereich niedrigerer in einen Bereich höherer Feldstärke. Zur besseren Absicherung gegenüber Voll-Duplex-Angriffen ist es auch denkbar, dass das Bewegungsmuster komplexer aufgebaut ist, d.h. dass der Benutzer beispielsweise einen Schritt nach rechts gehen muss, ehe das vorbestimmte Kriterium erfüllt ist. Es ist ferner denkbar, dass der Benutzer das Kriterium individuell verändern kann. Bei der Startkontrolle kann das vorbestimmte Kriterium erfüllt sein, wenn das Bewegungsmuster insbesondere eine Bewegung des mobilen Identifikationsgebers von einem Bereich außerhalb des Fahrzeugs in einen Bereich innerhalb des Fahrzeugs umfasst.

Gemäß einer weiteren vorteilhaften Ausführungsform fließt in die Beurteilungsgröße zusätzlich eine Vibration des mobilen Identifikationsgebers ein, die durch einen Vibrationssensor des mobilen Identifikationsgebers ermittelt wird. Die Beurteilungsgröße weist dadurch ein zusätzliches Merkmal auf, wodurch die Sicherheit weiter verbessert wird. Die Vibration kann beispielsweise aus einer Bewegung des Benutzers auf das Fahrzeugs zu resultieren. Bei der Startkontrolle ist es auch denkbar, dass zur Erfüllung des vorbestimmten Kriteriums eine Vibration des mobilen Identifikationsgebers innerhalb des Fahrzeugs erfolgen muss, beispielsweise dadurch, dass eine Tür des Fahrzeugs zugeschlagen wird.

Gemäß einer weiteren Ausführungsform des Verfahrens zur Kontrolle des Starts eines Fahrzeugs fließt in die Beurteilungsgröße zusätzlich eine Vibration des Fahrzeugs selbst ein, die durch einen Vibrationssensor des Fahrzeugs ermittelt wird. Nachdem beispielsweise festgestellt wurde, dass sich der mobile Identifikationsgeber innerhalb des Fahrzeugs befindet, könnte zur Erfüllung des vorbestimmten Kriteriums gefordert werden, dass zusätzlich eine Vibration, z.B. ausgelöst durch das Zuschlagen einer Tür des Fahrzeugs, erfolgen muss, welche durch einen Sensor des Fahrzeugs detektiert wird.

Gemäß einer weiteren Ausführungsform sendet die fahrzeugseitige Sende-/ Empfangseinrichtung von mindestens zwei unterschiedlichen Orten des Fahrzeugs Signale aus. Dies hat den Vorteil, dass dadurch der Abstand des mobilen Identifikationsgebers zur fahrzeugseitigen Sende-/Empfangseinrichtung präziser bestimmt werden kann. Auch der genaue Ort des mobilen Identifikationsgebers ist dadurch besser bestimmbar.

Gemäß einer weiteren Ausführungsform sendet die fahrzeugseitige Sende-/Empfangseinrichtung auf mindestens zwei unterschiedlichen Kanälen. Dadurch werden Voll-Duplex-Angriffe erschwert, da mehrere unterschiedliche Signale übertragen werden müssen.

Weiterer Gegenstand der Erfindung ist ein Fahrzeugkontrollsystem mit den Merkmalen des Anspruchs 9, welches ausgebildet ist, um eines der voranstehend beschriebenen Verfahren auszuführen. Durch ein derartiges Fahrzeugkontrollsystem lassen sich die voranstehend beschriebenen Vorteile entsprechend erreichen.

Nachfolgend wird die Erfindung rein beispielhaft anhand vorteilhafter Ausführungsformen unter Bezugnahme auf die beigefügte Zeichnung beschrieben. Es zeigt:

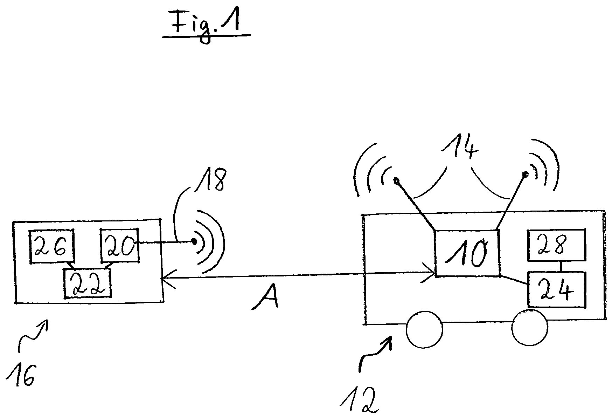

- Fig. 1: eine schematische Darstellung eines Fahrzeugkontrollsystems.

Das in Fig. 1 dargestellte Fahrzeugkontrollsystem umfasst eine fahrzeugseitige Sende-/Empfangseinrichtung 10, welche sich in einem Fahrzeug 12 befindet. Über Antennen 14 der fahrzeugseitigen Sende-/Empfangseinrichtung 10 wird in gewissen zeitlichen Abständen oder permanent ein Abfragesignal ausgesendet. Zur Differenzierung der Antennen 14 senden diese auf unterschiedlichen Kanälen, d.h. mit unterschiedlichen Frequenzen.

Ein mobiler Identifikationsgeber 16 umfasst eine Antenne 18, eine mit dieser verbundene Sende-/Empfangseinheit 20 sowie eine mit der Sende-/Empfangseinheit 20 verbundene Auswerteeinheit 22.

Befindet sich der mobile Identifikationsgeber 16 innerhalb eines bestimmten Abstands A von der fahrzeugseitigen Sende-/Empfangseinrichtung 10, empfängt die Sende-/Empfangseinheit 20 des mobilen Identifikationsgebers 16 mittels der Antenne 18 das von der fahrzeugseitigen Sende-/ Empfangseinrichtung 10 ausgesandte Signal. Die Auswerteeinheit 22 des mobilen Identifikationsgebers 16 ermittelt aus der absoluten Feldstärke des Signals den genauen Abstand zu der fahrzeugseitigen Sende-/ Empfangseinrichtung 10, gewissermaßen also zu dem Fahrzeug, und daraus wiederum eine Beurteilungsgröße. Die Beurteilungsgröße muss ein vorbestimmtes Kriterium erfüllen, damit eine Tür des Fahrzeugs entriegelt oder ein Motor des Fahrzeugs gestartet werden kann.

Dieses Kriterium kann beispielsweise ein vorgegebener maximaler Abstand zwischen dem mobilen Identifikationsgeber 16 und der fahrzeugseitigen Sende-/Empfangseinrichtung 10 sein oder ein vordefiniertes Bewegungsmuster, welches der mobile Identifikationsgeber 16 innerhalb eines vorgegebenen Zeitraums vollführen muss und welches aus zu verschiedenen Zeitpunkten gemessenen Abständen zwischen dem mobilen Identifikationsgebers 16 und der fahrzeugseitigen Sende-/Empfangseinrichtung 10 bestimmt wird.

Bei einem Verfahren zur Kontrolle des Zugangs zu dem Fahrzeug kann das vordefinierte Bewegungsmuster beispielsweise darin bestehen, dass sich der mobile Identifikationsgeber 16 auf die fahrzeugseitige Sende-/Empfangseinrichtung 10 zu bewegt, sich der Träger des mobilen Identifikationsgebers 16, hier auch als Benutzer bezeichnet, also dem Fahrzeug nähert. Aber auch komplexere Choreographien sind denkbar, bei denen der Benutzer beispielsweise einen Schritt nach rechts oder links gehen oder kurz stehen belieben muss, ehe das vorbestimmte Kriterium erfüllt ist.

Bei einem Verfahren zur Kontrolle des Starts des Fahrzeugs kann das vorbestimmte Kriterium erfüllt sein, wenn das Bewegungsmuster insbesondere eine Bewegung von einem Bereich außerhalb des Fahrzeugs in einen Bereich innerhalb des Fahrzeugs umfasst, der Benutzer also auf das Fahrzeug zu geht und in das Fahrzeug einsteigt.

Gemäß einer Variante, die nicht Gegenstand der Erfindung ist, sendet die Sende-/Empfangseinheit 20 des mobilen Identifikationsgebers 16, wenn die Beurteilungsgröße das vorbestimmte Kriterium erfüllt, über seine Antenne 18 ein Freigabesignal, welches durch die Antennen 14 der fahrzeugseitigen Sende-/Empfangseinrichtung 10 empfangen wird.

Das Freigabesignal kann beispielsweise ein Authentifizierungscode des mobilen Identifikationsgebers 16 sein. Es kann sich jedoch auch um ein zum Authentifizierungscode zusätzliches Freigabesignal handeln.

Bei Erhalt des Freigabesignals und/oder Authentifizierungscodes des mobilen Identifikationsgebers 16 und positiver Authentifizierung erteilt die fahrzeugseitige Sende-/Empfangseinrichtung 10 einer Einrichtung zum Entriegeln einer Tür des Fahrzeugs 12 und/oder zum Starten eines Motors des Fahrzeugs 12 eine Freigabe.

Erfindungsgemäß sendet der mobile Identifikationsgeber 16 zusätzlich zu seinem Authentifizierungscode die Beurteilungsgröße selbst an die fahrzeugseitige Sende-/Empfangseinrichtung 10. Die Überprüfung, ob die Beurteilungsgröße ein vorbestimmtes Kriterium erfüllt, erfolgt in diesem Fall also in einer Auswerteeinheit 24 des Fahrzeugs 12. Falls das vorbestimmte Kriterium erfüllt und der mobile Identifikationsgeber 16 positiv authentifiziert wird, wird einer Einrichtung zum Entriegeln einer Tür des Fahrzeugs 12 und/oder zum Starten eines Motors des Fahrzeugs 12 eine Freigabe erteilt.

Als weitere Sicherheitsmaßnahme kann der mobile Identifikationsgeber 16 zusätzlich einen Vibrationssensor 26 aufweisen, welcher Bewegungen und/oder Erschütterungen des mobilen Identifikationsgebers 16 registriert. Eine detektierte Vibration wird in der Auswerteeinheit 22 des mobilen Identifikationsgebers 16 ausgewertet und fließt in die Beurteilungsgröße mit ein. Die Beurteilungsgröße muss in diesem Fall also ein bestimmtes Kriterium erfüllen, welches sowohl vom Abstand zwischen dem mobilen Identifikationsgeber 16 und der fahrzeugseitigen Sende-/ Empfangseinrichtung 10 als auch von einer Vibration des mobilen Identifikationsgebers 16 abhängt.

So kann das vorbestimmte Kriterium bei der Zugangskontrolle z.B. erfüllt sein, wenn der mobile Identifikationsgeber 16 bei seiner Bewegung auf das Fahrzeug 12 zu Erschütterungen ausgesetzt ist, die beispielsweise durch die Schritte des Benutzers entstehen. Es ist auch denkbar, dass das Kriterium eine Erschütterung des mobilen Identifikationsgebers 16 im Fahrzeug 12 fordert, beispielsweise bedingt durch ein Hinsetzen des Benutzers und/oder ein Zuschlagen einer Tür des Fahrzeugs 12.

Alternativ oder zusätzlich kann auch das Fahrzeug 12 einen mit der Auswerteeinheit 24 des Fahrzeugs 12 verbundenen Vibrationssensor 28 aufweisen. Hierdurch lassen sich Vibrationen, die beispielsweise beim Hinsetzen des Benutzers und/oder beim Zuschlagen einer Tür des Fahrzeugs entstehen, in der Auswerteeinheit 24 des Fahrzeugs 12 auswerten und bei der Überprüfung der Beurteilungsgröße hinsichtlich des vorbestimmten Kriteriums mit berücksichtigen, wenn die Überprüfung fahrzeugseitig durchgeführt wird.

Abschließend sei darauf hingewiesen, dass auch eine Kombination aus Zugangs- und Startkontrolle möglich ist, d.h. also eine Aggregation der für den Fahrzeugzugang und Motorstart zu erfüllenden Kriterien. So kann als zusätzliches Kriterium bei der Startkontrolle beispielsweise verlangt werden, dass bereits die Berechtigung des Zugangs zum Fahrzeug auf eine der beschriebenen Arten verifiziert wurde.

### Bezugszeichenliste

- 10: fahrzeugseitige Sende-/Empfangseinrichtung
- 12: Fahrzeug
- 14: Antenne
- 16: mobiler Identifikationsgeber
- 18: Antenne
- 20: Sende-/Empfangseinheit
- 22: Auswerteeinheit
- 24: Auswerteeinheit
- 26: Vibrationssensor
- 28: Vibrationssensor

- A: Abstand

## Patentansprüche

1. Verfahren zur Kontrolle des Zugangs zu einem Fahrzeug (12), bei dem
eine fahrzeugseitige Sende-/Empfangseinrichtung (10) mindestens ein Signal aussendet;
ein mobiler Identifikationsgeber (16) das Signal der fahrzeugseitigen Sende-/Empfangseinrichtung (10) empfängt; und
eine Tür des Fahrzeugs (12) entriegelt werden kann, wenn der mobile Identifikationsgeber (16) fahrzeugseitig positiv authentifiziert wird und eine ermittelte Beurteilungsgröße ein vorbestimmtes Kriterium erfüllt,
**dadurch gekennzeichnet, dass**
der mobile Ientdifikationsgeber (16) aus der absoluten Feldstärke des Signals einen Abstand zwischen der fahrzeugseitigen Sende-/Empfangseinrichtung (10) und dem mobilen Identifikationsgeber (16) ermittelt und aus dem Abstand die Beurteilungsgröße ermittelt;
der mobile Identifikationsgeber (16) die Beurteilungsgröße an das Fahrzeug (12) sendet; und
die Überprüfung, ob die Beurteilungsgröße das vorbestimmte Kriterium erfüllt, fahrzeugseitig erfolgt.

2. Verfahren zur Kontrolle des Starts eines Fahrzeugs (12), bei dem
eine fahrzeugseitige Sende-/Empfangseinrichtung (10) mindestens ein Signal aussendet;
ein mobiler Identifikationsgeber (16) das Signal der fahrzeugseitigen Sende-/Empfangseinrichtung (10) empfängt; und
ein Motor des Fahrzeugs (12) gestartet werden kann, wenn der mobile Identifikationsgeber (16) positiv authentifiziert wird und eine ermittelte Beurteilungsgröße ein vorbestimmtes Kriterium erfüllt, **dadurch gekennzeichnet, dass**
der mobile Identifikationsgeber (16) aus der absoluten Feldstärke des Signals einen Abstand zwischen der fahrzeugseitigen Sende-/Empfangseinrichtung (10) und dem mobilen Identifikationsgeber (16) ermittelt und aus dem Abstand die Beurteilungsgröße ermittelt;
der mobile Identifikationsgeber (16) die Beurteilungsgröße an das Fahrzeug (12) sendet; und
die Überprüfung, ob die Beurteilungsgröße das vorbestimmte Kriterium erfüllt, fahrzeugseitig erfolgt.

3. Verfahren nach einem der vorhergehenden Ansprüche,
**dadurch gekennzeichnet, dass** das vorbestimmte Kriterium erfüllt ist, wenn der ermittelte Abstand zwischen der fahrzeugseitigen Sende-/ Empfangseinrichtung (10) und dem mobilen Identifikationsgeber (16) geringer als ein vordefinierter Abstand ist.

4. Verfahren nach Anspruch 1 oder 2,
**dadurch gekennzeichnet, dass** das vorbestimmte Kriterium erfüllt ist, wenn der mobile Identifikationsgeber (16) innerhalb eines vorgegebenen Zeitraums ein vordefiniertes Bewegungsmuster vollführt.

5. Verfahren nach einem der vorhergehenden Ansprüche,
**dadurch gekennzeichnet, dass** in die Beurteilungsgröße zusätzlich eine Vibration des mobilen Identifikationsgebers (16) einfließt, die durch einen Vibrationssensor (26) des mobilen Identifikationsgebers (16) ermittelt wird.

6. Verfahren nach einem der Ansprüche 2 bis 5,
**dadurch gekennzeichnet, dass** in die Beurteilungsgröße zusätzlich eine Vibration des Fahrzeugs (12) einfließt, die durch einen Vibrationssensor (28) des Fahrzeugs (12) ermittelt wird.

7. Verfahren nach einem der vorherigen Ansprüche,
**dadurch gekennzeichnet, dass** die fahrzeugseitige Sende-/Empfangseinrichtung (10) von mindestens zwei unterschiedlichen Orten des Fahrzeugs (12) Signale aussendet.

8. Verfahren nach einem der vorhergehenden Ansprüche,
**dadurch gekennzeichnet, dass** die fahrzeugseitige Sende-/Empfangseinrichtung (10) auf mindestens zwei unterschiedlichen Kanälen sendet.

9. Fahrzeugkontrollsystem, welches ausgebildet ist, um ein Verfahren nach einem der vorhergehenden Ansprüche auszuführen, umfassend
eine fahrzeugseitige Sendeeinrichtung (10) zum Aussenden mindestens eines Signals;
einen mobilen Identifikationsgeber (16) mit einer Sende-/Empfangseinheit (20) zum Empfangen des Signals, einer Auswerteeinheit (22) zur Ermittlung eines Abstands zwischen der fahrzeugseitigen Sende- / Empfangseinrichtung (10) und dem mobilen Identifikationsgeber (16) aus der absoluten Feldstärke des Signals und zur Ermittlung einer Beurteilungsgröße aus dem Abstand sowie einer Sende-/Empfangseinheit (20) zum Aussenden der Beurteilungsgröße;
eine fahrzeugseitige Empfangseinrichtung (10) zum Empfangen der Beurteilungsgröße;
eine fahrzeugseitige Auswerteeinheit (24) zum Auswerten der Beurteilungsgröße; und
eine Einrichtung zum Entriegeln einer Tür des Fahrzeugs (12) und/oder eine Einrichtung zum Starten eines Motors des Fahrzeugs (12).

## Claims

1. Method for controlling access to a vehicle (12), wherein
a vehicle-side transmitting/receiving device (10) sends at least one signal; a mobile identification unit (16) receives the signal of the vehicle-side transmitting/receiving device (10); and
a door of the vehicle (12) is unlockable if the mobile identification unit (16) is positively authenticated at the vehicle-side and a determined evaluation parameter fulfills a predetermined criterion,
**characterized in that**
the mobile identification unit (16) determines a distance between the vehicle-side transmitting/receiving device (10) and the mobile identification unit (16) from the absolute field strength of the signal and determines the evaluation parameter from the distance;
the mobile identification unit (16) sends the evaluation parameter to the vehicle (12); and
the checking whether the evaluation parameter fulfills the predetermined criterion is performed at the vehicle-side.

2. Method for controlling the startup of a vehicle (12), wherein
a vehicle-side transmitting/receiving device (10) sends at least one signal;
a mobile identification unit (16) receives the signal of the vehicle-side transmitting/receiving device (10); and
an engine of the vehicle (12) can be started if the mobile identification unit (16) is positively authenticated and a determined evaluation parameter fulfills a predetermined criterion,
**characterized in that**
the mobile identification unit (16) determines a distance between the vehicle-side transmitting/receiving device (10) and the mobile identification unit (16) from the absolute field strength of the signal and determines the evaluation parameter from the distance;
the mobile identification unit (16) sends the evaluation parameter to the vehicle (12); and
the checking whether the evaluation parameter fulfills the predetermined criterion is performed at the vehicle-side.

3. Method according to one of the preceding claims,
**characterized in that**
the predetermined criterion is fulfilled if the determined distance between the vehicle-side transmitting/receiving device (10) and the mobile identification unit (16) is less than a predefined distance.

4. Method according claim 1 or 2,
**characterized in that**
the predetermined criterion is fulfilled if the mobile identification unit (16) performs a predefined movement pattern within a given time period.

5. Method according to one of the preceding claims,
**characterized in that**
a vibration of the mobile identification unit (16) additionally contributes to the evaluation parameter, determined by a vibration sensor (26) of the mobile identification unit (16).

6. Method according to any one of claims 2 to 5,
**characterized in that**
a vibration of the vehicle (12) additionally contributes to the evaluation parameter, determined by a vibration sensor (28) of the vehicle (12).

7. Method according to one of the preceding claims,
**characterized in that**
the vehicle-side transmitting/receiving device (10) sends signals from at least two different locations of the vehicle (12).

8. Method according to one of the preceding claims,
**characterized in that**
the vehicle-side transmitting/receiving device (10) sends at least on two different channels.

9. Vehicle control system adapted to perform a method according to one of the preceding claims, comprising
a vehicle-side transmitting device (10) for sending at least one signal;
a mobile identification unit (16) with a transmitting/receiving unit (20) for receiving the signal, an evaluation unit (22) for determining a distance between the vehicle-side transmitting/receiving device (10) and the mobile identification unit (16) from the absolute field strength of the signal and for determining an evaluation parameter from the distance, and a transmitting/receiving unit (20) for sending the evaluation parameter;
a vehicle-side receiving device (10) for receiving the evaluation parameter;
a vehicle-side evaluation unit (24) for evaluating the evaluation parameter; and
means for unlocking a door of the vehicle (12) and/or means for starting an engine of the vehicle (12).

## Revendications

1. Procédé de contrôle de l'accès à un véhicule (12), dans lequel
un dispositif émetteur/récepteur (10) côté véhicule émet au moins un signal ;
un identificateur mobile (16) reçoit le signal du dispositif émetteur/récepteur (10) côté véhicule ; et
une porte du véhicule (12) peut être déverrouillée lorsque ledit identificateur mobile (16) est authentifié de façon positive du côté véhicule et qu'une grandeur de jugement détectée satisfait un critère prédéterminé,
**caractérisé en ce que**
à partir de l'intensité de champ absolue du signal, identificateur mobile (16) détecte une distance entre le dispositif émetteur/récepteur (10) côté véhicule et l'identificateur mobile (16) et détecte à partir de la distance la grandeur de jugement ;
identificateur mobile (16) émet la grandeur de jugement au véhicule (12) ; et
le contrôle pour savoir si la grandeur de jugement satisfait le critère prédéterminé s'effectue du côté véhicule.

2. Procédé de contrôle du démarrage d'un véhicule (12), dans lequel
un dispositif émetteur/récepteur (10) côté véhicule émet au moins un signal ;
un identificateur mobile (16) reçoit le signal du dispositif émetteur/récepteur (10) côté véhicule ; et
un moteur du véhicule (12) peut être démarré lorsque ledit identificateur mobile (16) est authentifié de façon positive et qu'une grandeur de jugement détectée satisfait un critère prédéterminé,
**caractérisé en ce que**
à partir de l'intensité de champ absolue du signal, identificateur mobile (16) détecte une distance entre le dispositif émetteur/récepteur (10) côté véhicule et identificateur mobile (16) et détecte à partir de la distance la grandeur de jugement ;
identificateur mobile (16) émet la grandeur de jugement au véhicule (12) ; et
le contrôle pour savoir si la grandeur de jugement satisfait le critère prédéterminé s'effectue du côté véhicule.

3. Procédé selon l'une des revendications précédentes,
**caractérisé en ce que**
le critère prédéterminé est satisfait lorsque la distance détectée entre le dispositif émetteur/récepteur (10) côté véhicule et l'identificateur mobile (16) est inférieure à une distance prédéfinie.

4. Procédé selon l'une des revendications précédentes,
**caractérisé en ce que**
le critère prédéterminé est satisfait lorsque identificateur mobile (16) exécute un schéma de mouvements prédéfini à l'intérieur d'une période temporelle définie.

5. Procédé selon l'une des revendications précédentes,
**caractérisé en ce que**
une vibration de identificateur mobile (16) est additionnellement prise en compte dans la grandeur de jugement, qui est détectée par un capteur de vibrations (26) de identificateur mobile (16).

6. Procédé selon l'une des revendications 2 à 5,
**caractérisé en ce que**
une vibration du véhicule (12) est additionnellement en supplément prise en compte dans la grandeur de jugement, qui est détectée par un capteur de vibrations (28) du véhicule (12).

7. Procédé selon l'une des revendications précédentes,
**caractérisé en ce que**
le dispositif émetteur/récepteur (10) côté véhicule émet des signaux à partir d'au moins deux endroits différents du véhicule (12).

8. Procédé selon l'une des revendications précédentes,
**caractérisé en ce que**
le dispositif émetteur/récepteur (10) côté véhicule émet sur au moins deux canaux différents.

9. Système de contrôle de véhicule réalisé pour mettre en oeuvre un procédé selon l'une des revendications précédentes, comprenant
un dispositif émetteur (10) côté véhicule pour émettre au moins un signal ;
un identificateur mobile (16) pourvu d'une unité émettrice/réceptrice (20) pour recevoir le signal, d'une unité d'évaluation (22) pour détecter une distance entre le dispositif émetteur/récepteur (10) côté véhicule et identificateur mobile (16) à partir de l'intensité de champ absolue du signal et pour détecter une grandeur de jugement à partir de la distance, ainsi que d'une unité émettrice/réceptrice (20) pour émettre la grandeur de jugement ;
un dispositif récepteur (10) côté véhicule pour recevoir la grandeur de jugement ;
une unité d'évaluation (24) côté véhicule pour évaluer la grandeur de jugement ; et
un dispositif pour déverrouiller une porte du véhicule (12) et/ou un dispositif pour démarrer un moteur du véhicule (12).
